(19) Europäisches Patentamt
European Patent Office
Office européen des brevets

(11) **EP 3 315 944 B1**

(12) **EUROPEAN PATENT SPECIFICATION**

(45) Date of publication and mention
of the grant of the patent:
**20.03.2019 Bulletin 2019/12**

(51) Int Cl.:
***G01N 21/27*** *(2006.01)*     ***G01N 21/59*** *(2006.01)*
***G01N 21/15*** *(2006.01)*

(21) Application number: **17199295.1**

(22) Date of filing: **31.10.2017**

(54) **METHOD AND APPARATUS FOR MEASUREMENT OF A MATERIAL IN A LIQUID THROUGH ABSORPTION OF LIGHT**

VERFAHREN UND VORRICHTUNG ZUR MESSUNG EINES MATERIALS IN EINER FLÜSSIGKEIT DURCH ABSORPTION VON LICHT

PROCÉDÉ ET APPAREIL DE MESURE D'UN MATÉRIAU DANS UN LIQUIDE PAR ABSORPTION DE LUMIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.11.2016 US 201615340536**

(43) Date of publication of application:
**02.05.2018 Bulletin 2018/18**

(73) Proprietor: **Advanced Sensors Limited County Antrim BT38 8YF (GB)**

(72) Inventors:
• **Sreekumar, Jeyan**
  **Carrickfergus, Antrim BT38 8YF (GB)**
• **McBride, Karl**
  **Carrickfergus, Antrim BT38 8YF (GB)**
• **McGeown, Neal**
  **Carrickfergus, Antrim BT38 8YF (GB)**

(74) Representative: **Zacco Denmark A/S
Arne Jacobsens Allé 15
2300 Copenhagen S (DK)**

(56) References cited:
**US-A- 5 446 280**     **US-A1- 2013 100 452**
**US-A1- 2017 115 225**     **US-B2- 7 935 938**

**Description**

BACKGROUND OF THE NVENTION

Technical Field

This invention relates to measuring material in a liquid through the absorption of light.

Description of the Prior Art

With the world's dependency on oil, more oil is being processed in oil refineries and shipped by pipelines than ever before. Many of the pipes (a) leading from/to oil production or (b) within refining operations require measuring the amount of oil that may be in a liquid (mainly water) flowing in the pipes. To aid in this process, in-line measuring apparatuses are commonly used to measure the amount of oil that is present in the pipe.

When subject to certain lights, oil has a natural fluorescence. The common way of determining the amount of oil presence is to measure the amount of fluorescence that can be processed. The measuring of the amount of oil present is commonly done by a fluorometer. A typical in-line fluorometer has an excitation light source which transmits the light onto the sample to a measurement region through a measurement window. When the oil in sample absorbs the light, it fluoresces. The resultant fluorescence light is transmitted back through the measurement window and is received by the fluorescence detector. By measuring the amount of fluorescent light, the amount of oil present in the water can be determined. However, in the prior systems, the measurement was accurate only up to a certain concentration of oil in water. U.S. Patent No. 7,935,938 would only detect oil in water up to approximately 1,000 parts per million (hereinafter "ppm") before measurements started losing accuracy.

Applicant has discovered modifications that can be made to U.S. Patent No. 7,935,938 to greatly improve the accuracy of measurements of oil-in-water in ppm at higher concentrations, which significantly increases accuracy of measurements from 1,000 ppm to 100,000 ppm (10%) of oil in water.

Further, Applicant has discovered that a very similar apparatus may be used to measure other materials in a liquid through an absorption of light technique. The absorption of light technique requires a light source plus continual adjustments to mitigate any inaccuracies of changes in the light source output.

US5446280 discloses a fiber optic sensor fully compensated for light source intensity variation, fiber losses and modal power distribution by providing input to one end of an optical fiber from a relatively broad band light source containing at least two spectrally separated wavelengths. US2013100452 discloses a device for determining the concentration of substances in fluid media, by dividing the emission spectrum of a LED in two parts; one part is used for the absorption measurement of the substance to be determined, and the second part is used for referencing the amplitude fluctuations of the emission intensity. In this device, both the light used for the absorption measurement and the light used for the reference measurement pass through the complete set-up to the detector unit on the same path.

BRIEF SUMMARY OF THE INVENTION

It is an object of the present invention to provide a method and apparatus for measurement of material in a liquid through absorption of light.

It is also an object of the present invention to mitigate any inaccuracies as a result of a change in intensity of the light output.

It is yet another object of the present invention to provide a stable sample measurement, irrespective of variations in light source output.

An apparatus and method for measuring material in a liquid through use of an absorption technique comprises a measurement chamber containing a liquid to be analyzed, a light source to transmit the light at a defined target region of the measurement chamber, the absorbed light from the target region being measured by a detector to determine the concentration of material within the measurement chamber, the angle between the transmitted light and the absorbed light being very small. The apparatus includes an optical block comprising beam splitters and an optical attenuator. A software module mitigates any inaccuracies as a result of a change in intensity of the light output from the emission source. The optical attenuator is adjusted to increase or decrease the light intensity to a level similar to that received from the target region. The software module controls light stability, which software module uses a mathematical model to compensate for deviations in sample measurements due to variations in optical system components and the environment. This results in a stable sample measurement, irrespective of light source output.

BRIEF DESCRIPTION OF THE DRAWINGS

Fig. 1 is a schematic view of an apparatus embodying the present invention.
Fig. 2 is a pictorial view of a measurement chamber from the apparatus as shown in Fig. 1.
Fig. 3 is a schematic view of a preferred spatial relationship between a transmitted excitation light and a received fluorescent signal from the apparatus shown in Fig. 1.
Fig. 4(a) is measurements of fluorescent materials at different ppm in U.S. Patent No. 7,935,938.
Fig. 4(b) is measurements of the fluorescent material at different ppm in a system incorporating the current improvements over U.S. Patent No. 7,935,938.
Fig. 5 is a modified schematic from Fig. 1 further illustrating changes from U.S. Patent No. 7,935,938.
Fig. 6 is a schematic view of an apparatus for measurement of material in a liquid through absorption of light.
Fig. 7 is a pictorial view of a measurement chamber to be used with the apparatus shown in Fig. 6.
Fig. 8 is an enlarged pictorial view of the optical block shown in Fig. 6.
Fig. 9 is a graft of light intensity versus wavelength showing the spectral output of a dual path system.
Fig. 10 is a flow chart illustrating the operational logic of the light control module in Fig. 6
Fig. 11A-D are illustrative diagrams comparing light intensity to wavelength with various samples as described in examples 1-4.

DESCRIPTION OF THE PREFERRED EMBODIMENT

All reference numerals given herein below will start with the number 110 or higher so that none of the reference numerals will conflict with the reference numerals of U.S. Patent No. 7,935,938.

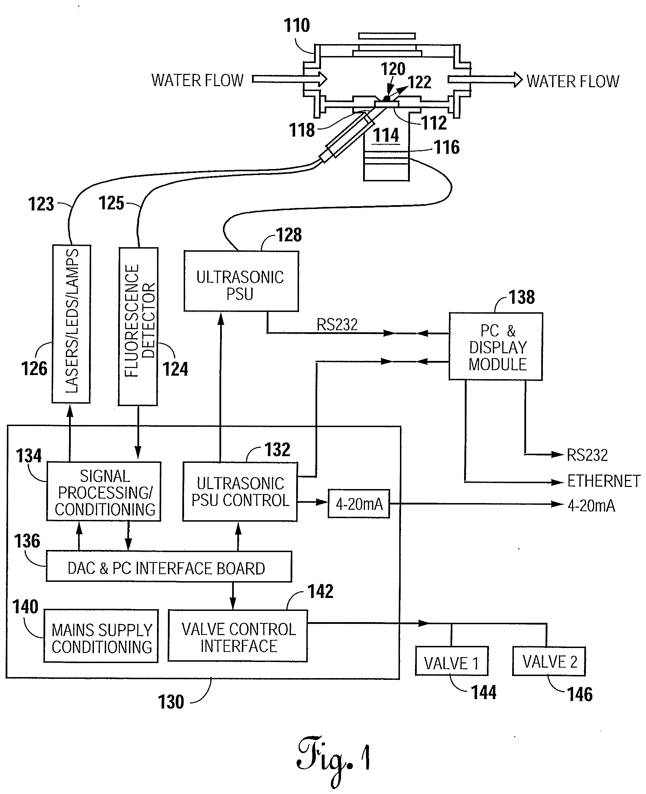

Referring to Fig. 1 of the present disclosure, a measurement chamber 110 is shown with water flowing there through. A measurement window 112 is provided on one side of the measurement chamber 110. In contact with the measurement window 112 is a coupling mass 114, with piezoelectric transducers 116 being located in the coupling mass 114 but away from the measurement window 112.

Connecting through the coupling mass 114 to the measurement window 112 is a single channel 118. Through the single channel 118, an excitation signal 122 is transmitted and fluorescent light 120 is collected or received using the light guides 123 and 125, respectively. The excitation signal 122 can be lasers, light emitting diodes or lamps 126. What is required is that the excitation signal 122 cause oil particles contained in the water flow to fluoresce so that the fluorescent light 120 can be detected by fluorescent detector 124. The excitation signal 122 is provided by an excitation source 126. The piezoelectric transducers 116 are energized by ultrasonic power supply 128.

The apparatus as shown in Fig. 1 has a master circuit board 130. While the composition and configuration of the circuitry may vary, an illustrated example of the circuitry includes an ultrasonic power supply control 132 for the ultrasonic power supply 128. A signal processing/conditioning unit 134 prepares a signal for the excitation source 126 (i.e., lasers/LEDs/lamps) and conditions the fluorescent light signal received from the fluorescent detector 124.

An interface unit 136 provides interfacing between the signal processing/conditioning unit 134, ultrasonic power supply control 132 and the computer 138. The computer 138 will have an internal display module, plus the computer 138 can either (1) connect to an RS232 connector or (2) to the Ethernet. The computer 138 will be appropriately programmed to operate the apparatus shown in Fig. 1. The computer 138 may be at the site with the rest of the apparatus shown in Fig. 1, or remotely located.

A power supply conditioning unit 140 is provided to operate the circuitry shown in Fig. 1.

Fluid flow through the measurement chamber 110 may be controlled by valve control interface 142, which controls operation of valve 144 or valve 146. Valve 144 may be located at one end of the measurement chamber 110, and valve 146 may be located at the opposite end thereof so that a liquid sample may be captured within measurement chamber 110 if desired.

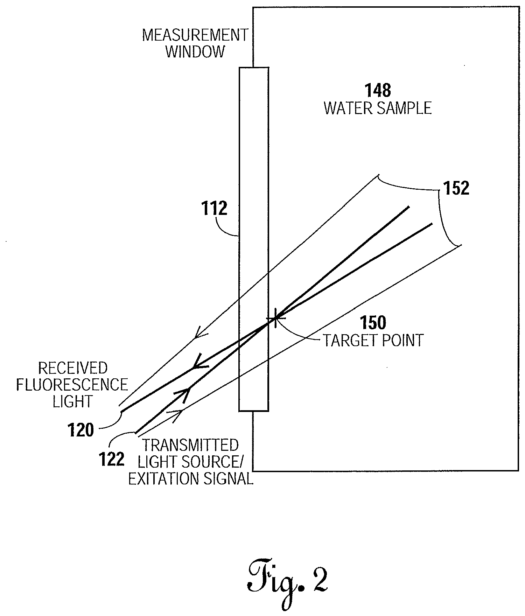

Referring now to Fig. 2, a water sample 148 is shown, which water sample 148 could be inside of measurement chamber 110. A measurement window 112 is provided through which access is obtained to the water sample 148. The excitation signal 122 is transmitted through the measurement window 112 to a target point 150, which target point 150 is just inside the measurement window 112. Any oil contained in the water sample 148 at target point 150 will create a fluorescent light 120 that is received back through the measurement window 112. As can be seen in Fig. 2, the angle between the excitation signal 122 and the fluorescent light 120 is very small. The excitation signal 122 and the fluorescent light 120 are very close together and are within a narrow envelope 152.

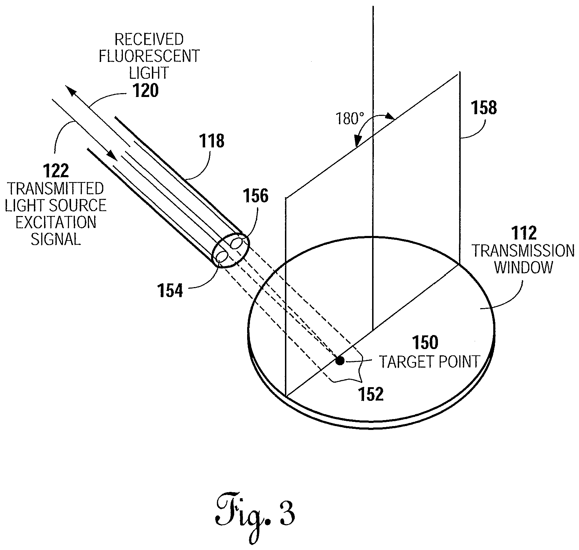

Referring to Fig. 3, a further pictorial illustration of how the excitation signal 122 and the fluorescent light 120 are transmitted and received is illustrated. The single channel 118 (a) provides the excitation signal 122 and (b) receives the fluorescent light 120. Inside of the single channel 118 are fiber optic ends 154 and 156. The fiber optic ends 154 may be a single fiber optic that is split on the end thereof, are two separate strands of fiber optics contained in single channel 118. In either event, the fiber optic ends 154 and 156 are in close proximity to each other. The angle at which the excitation signal 122 strikes the transmission window 112 is at a substantial angle to the perpendicular plane 158 of the transmission window 112. Likewise, the angle at which the fluorescent light 120 is received from the target point 150 is also at a substantial angle with respect to the perpendicular plane 158.

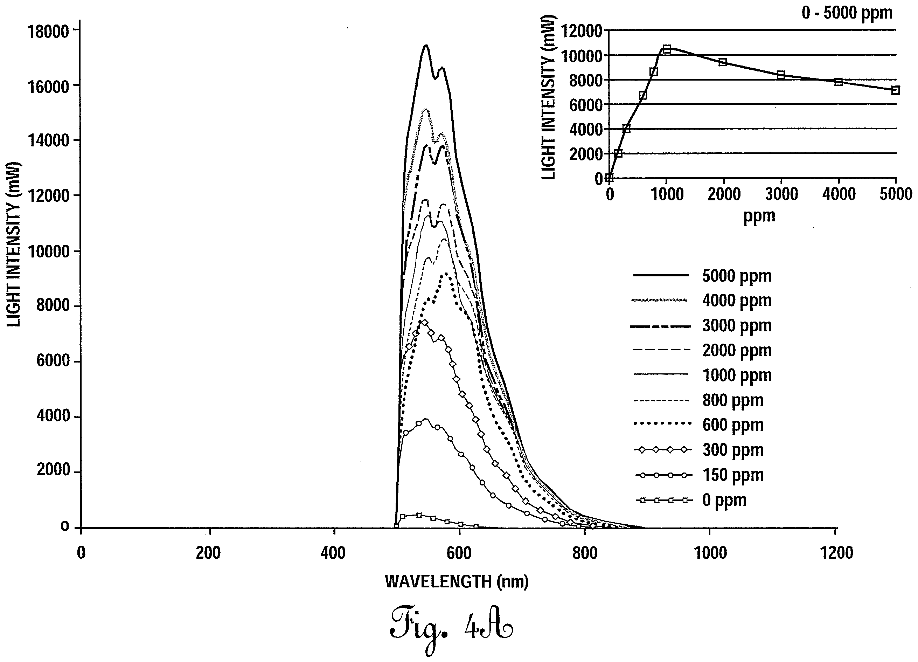

Using the device as shown in U.S. Patent No. 7,935,938, it is difficult to make measurements of oil-in-water for both conventional light and medium crude oils if the ppm's exceed the 1,000 ppm range. This is demonstrated in Fig. 4A attached hereto where measurements are made of a crude oil for parts per million (ppm) varying from 0 to 5,000. As can be seen in Fig. 4A if the ppms exceed 1,000, the relationship becomes non-linear and concentration quenching occurs between concentrations 1,000 ppm and 5,000 ppm. Fig. 4A gives the light intensity plotted versus the wavelength for a crude oil at varying ppms. The light intensity plotted versus ppm is shown in the upper right plot.

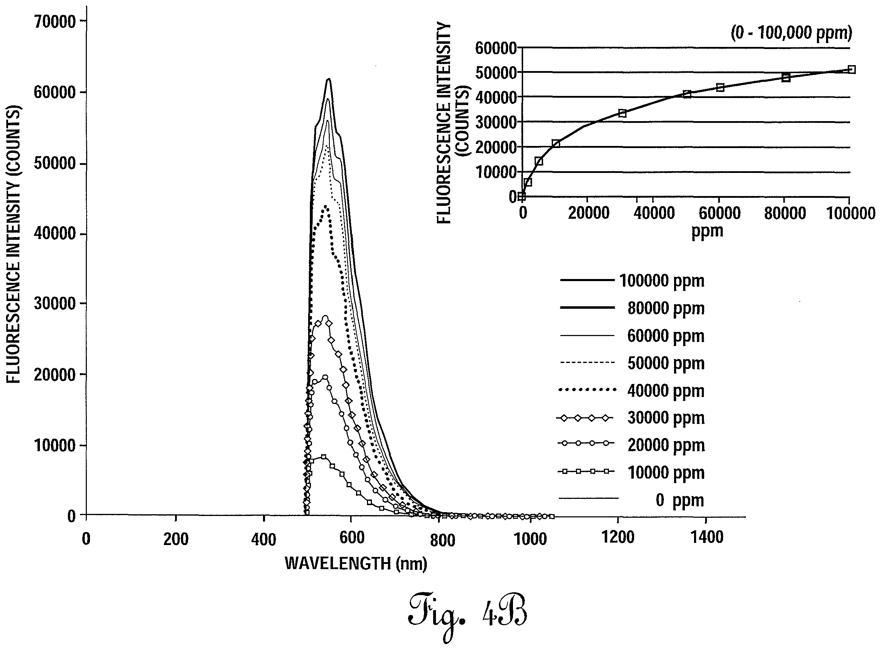

Modifying the device in U.S. Patent No. 7,935,938 to utilize the features shown herein for crude oil is again run, but at higher ppm's range of 0 to 100,000 (see Fig. 4B). As can be seen in the upper right chart of Fig 4B, the light intensity continues as a linear function of the ppms up to approximately 100,000 ppm. This illustrates how U.S. Patent No. 7,935,938 once modified as illustrated herein increases the sensitivity of the disclosure of US 7,935,938 at higher ppm' of light-to-medium weight crude oil.

Different oils were examined and the results obtained were similar to the discussed results.

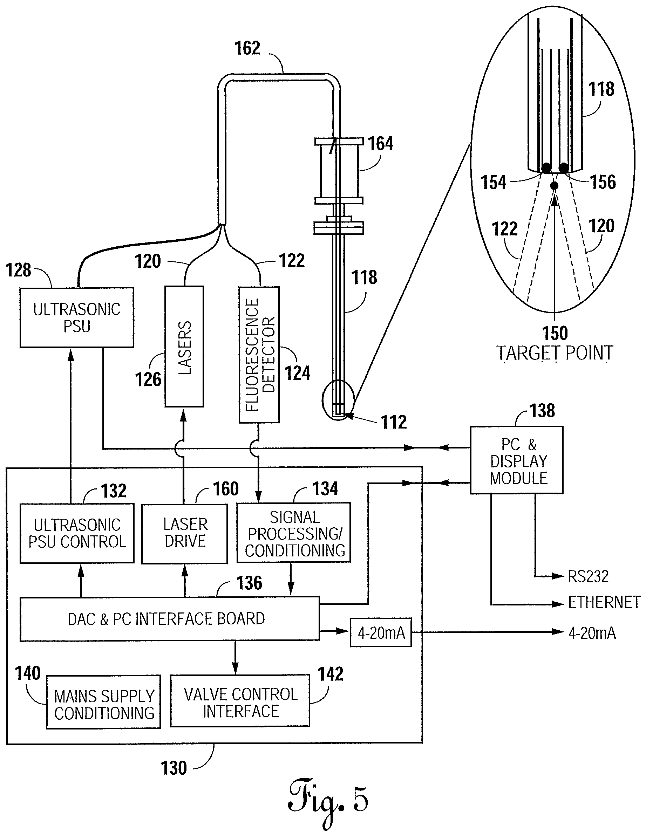

Referring to Fig. 5, the apparatus as shown in Fig. 1 is given in further detail with the single channel 118 being illustrated in an enlarged view. In this embodiment as shown in Fig. 5, the excitation source 112 of lasers has a laser drive 160.

A single cable 162 connects to the ultrasonic transducer 164, which then has a single channel 118 pointing at the target point 150 through the measurement window 112. Inside of the single channel 118 are the fiber optic ends 154 and 156. The fiber optic ends 154 and 156 may be a single fiber optic split on each end thereof, or two separate fiber optic strands. In either event, fiber optic ends 154 and 156 are located adjacent to each other. Therefore, the angle between the excitation signal 122 and the fluorescent light 120 is very small; however, that angle is enlarged in Fig. 5 for purposes of illustration.

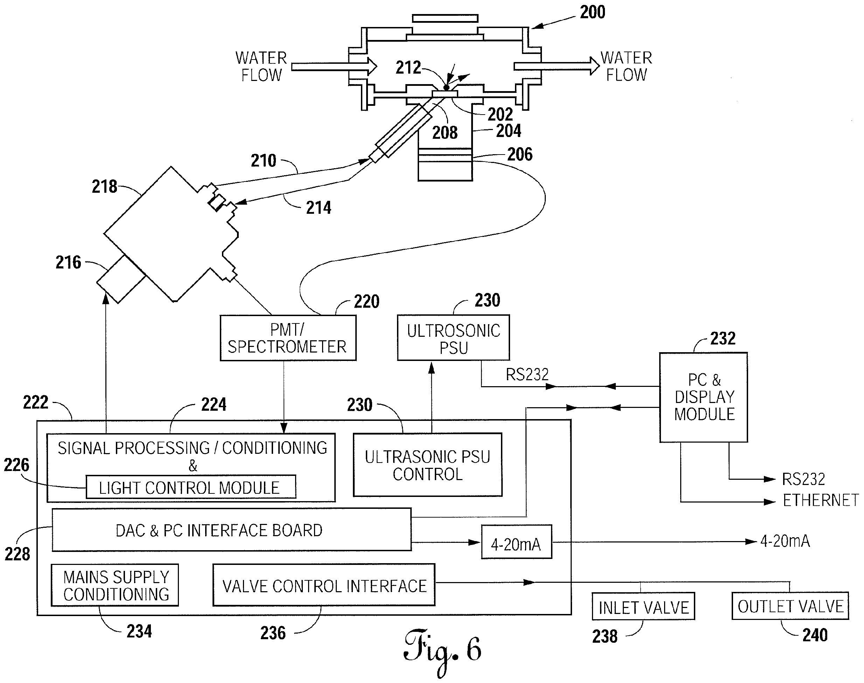

To avoid confusion with United States Patent No. 7,935,938 and United States Patent Application No. 14/812,026, filed on July 19, 2015, the numerals applied to Figs. 6 through 10, relating to the present invention, will start with the number 200 or higher.

Referring to Fig. 6, a measurement chamber 200 is shown. Water flows through the measurement chamber 200 in the direction indicated by the arrows. The measurement chamber 200 has a measurement window 202 in one side thereof. Coupled to the measurement window 202 is a coupling mass 204 with piezoelectric transducers 206 located on one end of the coupling mass 204. A single channel 208 extends through coupling mass 204 to the measurement window 202. The single channel 208 has (a) a transmitting fiber optic end for delivering a transmitted signal 210 to a target point 212 and (b) a receiving fiber optic end adjacent thereto for receiving absorbed light 214 from target point 212.

A light source 216 transmits light through an optical block 218 to give a transmitted signal 210 through the single channel 208 to the target point 212. Part of the transmitted signal 210 (i.e., light) is absorbed by material at the target point 212. The absorbed light is reflected to give the amount of absorbed light 214.

The transmitted signal 210 is created by any suitable type of excitation light signal that can be generated by lasers, light emitting diodes or lamps as may be contained in the light source 216.

The transmitted signal 210 from the light source 216 is transmitted through the measurement window 202 onto the material in the liquid to be measured at target point 212.

A part of a transmitted signal 210 is absorbed into some organic molecules present in the material at specific wavelengths and the absorbed light is detected. The transmitted signal 210 has a broader wavelength wherein the organic molecules are detected directly by measuring changes in absorption at a defined target point 212 using a detector such as PTM/Spectrometer 220 measuring at the absorption wavelengths. The target point 212 shown in Fig. 6 is close to the inside face of a measurement window 202 wherein the angle of measurement of the detector 220 is obtuse. The path link of the transmitted signal 210 and absorbed light 214 through the sample to the target point 212 is fixed.

A master control board 222 is provided in the invention illustrated in Fig. 6. The master control board 222 has signal processing/conditioning 224 which has as a subpart thereof a light control module 226. The light control module 226 is used to compensate for deviations in the transmitted signal 210, which are deviations in the light beam from the light source 216. The signal processing/conditioning unit 224 prepares a signal for the light source 216 and conditions the signal received by detector 220 from the absorbed light 214 via the signal channel 208 from the target point 212.

The DAC and PC interface board 228 provides interfacing between the signal processing conditioning unit 224, the ultrasonic power supply unit 230 and the PC and display module 232. The PC and display module 232 has an internal display module plus a computer that can either (1) connect to an RS 232 connector or (2) to the Ethernet. The computer within the PC and display module 232 will be appropriately programmed to operate the apparatus shown in Fig. 6. The PC and display module 232 may be on location at the site or remotely located.

A main supply conditioning 234 is used to condition power used to operate the master control board 222.

Flow through the measurement chamber 200 is controlled by valve control interface 236 which operates inlet valve 238 or outlet valve 240 to control flow through measurement chamber 200. By closing both the inlet valve 238 and the outlet valve 240, a liquid sample may be captured with the measurement chamber 200.

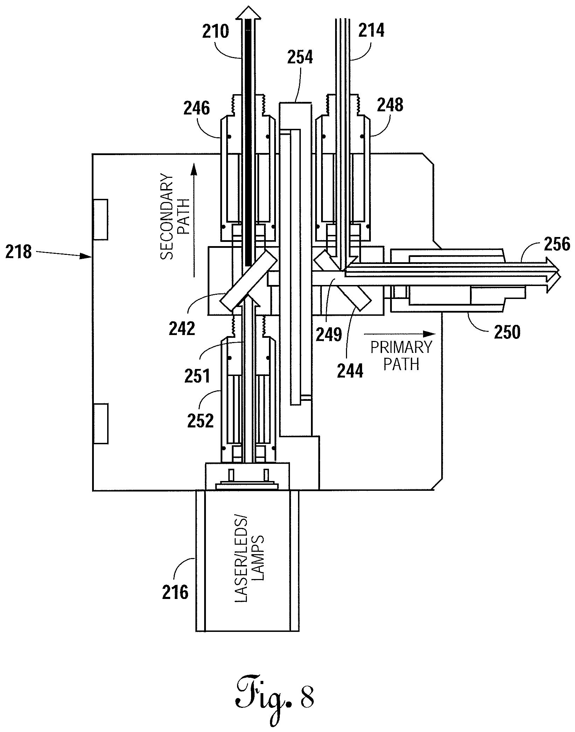

Referring now to Figs. 6 and 8 in combination, the internal workings of the optical block 218 will be explained in more detail. Light 251 from the light source 216 travels through the beam splitters 242 and 244. Collimators 246, 248, 250 and 252 refocus the light into a beam.

The light source 216 provides light 251 through a collimator 252 to the beam splitter 242. From the beam splitter 242, a portion of the light flows through collimator 246 to provide the transmitted signal 210. The absorbed light 214 is received through collimator 248 before it hits beam splitter 244. Also transmitted through beam splitter 244 is light 249 that is reflected by beam splitter 242. Both light 249 and absorbed light 214 give recombined light beam 256 which travels through a collimator 250 to the detector 220 (PTM/Spectrometer).

Contained within the optical block 218 is a variable optical attenuator 254 to avoid saturation of detector (PMT/Spectrometer) 220.

Light 251 from the light source 216 is first collimated in collimator 252 and then sent through beam splitter 242 to divide into two beams. Beam splitter 242 is a long pass dichroic mirror which is highly reflective below the cut-off wavelength and highly transmitted above the cut-off wavelength, whereby the transmitted light is split at a cut-off wavelength such that wavelengths above the cut-off wavelength are transmitted into the measurement chamber 200, but wavelengths below the cut-off wavelength are reflective to the second beam splitter 244. The single channel 208 (see Fig. 6) is used both for the transmitted signal 210 and the absorbed light signal 214. The signal channel 208 is a bifurcated optical filter in a custom bifurcated assembly with blue silicone covered steel Monocoil with two optical legs. One leg is arranged to deliver the transmitted signal 210 from the light source 216 into the measurement chamber 200 and the other leg being arranged to carry absorbed light 214 from the measurement chamber 200 to the detector 220.

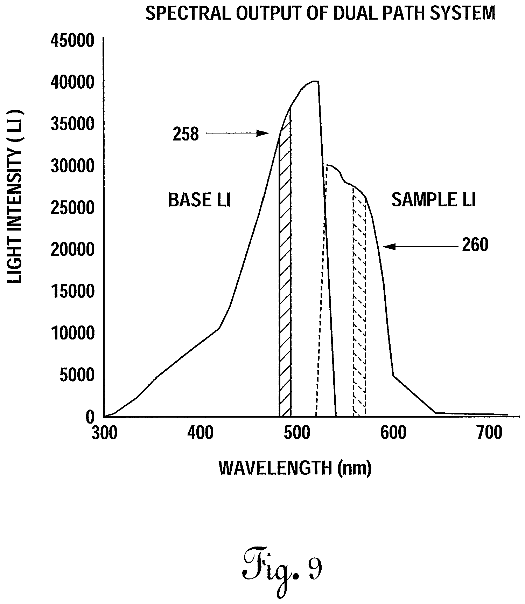

The secondary beam splitter 244 as shown in Fig. 8 is a short pass dichroic mirror, which is highly reflective above the cut-off wavelength and highly transmitted below. The secondary beam splitter 244 is used to (1) reflect the absorbed light signal 214 being received from the measurement chamber 200 and (2)transmit there through the light 249 reflected by beam splitter 242 with the two light beams being recombined light beams 256 that are passed to the detector 220. Detector 220 upon receiving the recombined light beams 256 produces a single spectral output as shown in Fig. 9 with the part below the cut-off wavelength being area 258 and the part above the cut-off wavelength being area 260. Variable optical attenuator 254 within the optical block 218 attenuates the light of the recombined light beams 256 to avoid saturation of the detector 220.

The light control module 226 shown in Fig. 6 is programmed to control the deviation from a base light intensity as a result of a change in light output from the light source 216. The light control module 226 is used in conjunction with the optical block 218 to compensate for deviations in sample measurements due to variations in the optical system components and the environment on a real-time basis. This counteracts variations in output of the light source 216 while matching the principles of traditional absorption measurements. The net result is a stable sample measurement irrespective of the intensity of the light source 216.

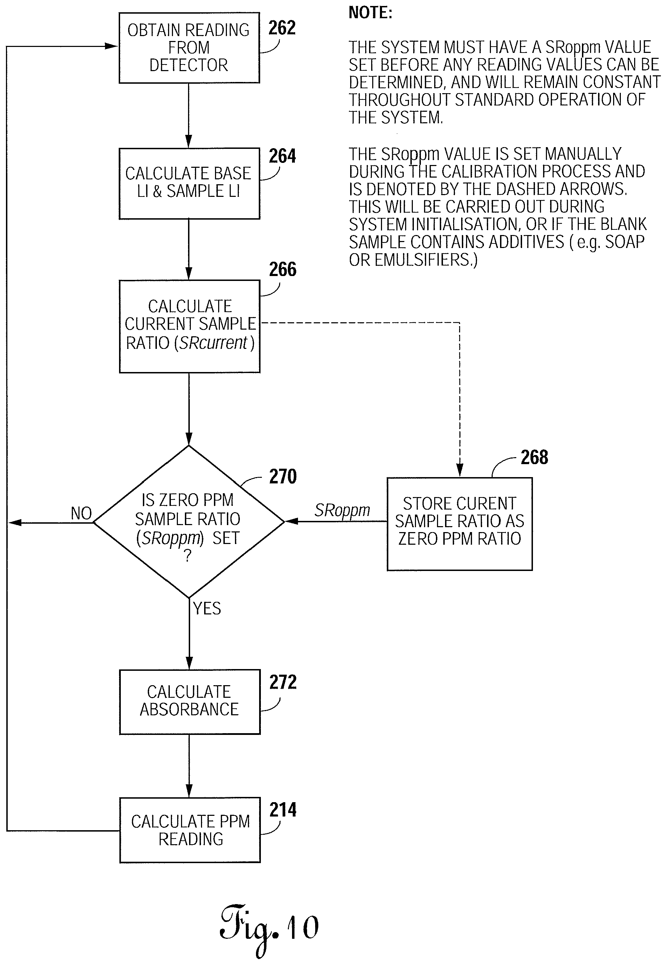

Fig. 10 shows a flow chart illustrating the operation of the light control module 226. The light control module 226 determines the value of a sample in a way that counteracts variants in the output of the light source 216.

During calibration, a water sample will be placed in the measurement chamber 200. A blank sample ratio ($SR_{OPPM}$) will be set equal to a current sample ratio ($SR_{current}$). From this point onward, the light control module will carry out the steps shown in Fig. 10.

Light is generated from the light source 216 at a cut-off wavelength to obtain an absorption response from a water sample within the target point 212 of the measurement chamber 200 to detect light intensities (LI) being received from the secondary and primary optical paths by means of detector 220 to generate a single spectral output as shown in Fig. 9 with two distinguishable areas for the water sample. This first step is to obtain a reading from the detector 262. The second step is to calculate base LI and sample LI 264. This is determined by summing the light intensities between the wavelength mask limits and dividing by the range of each wavelength mask. The wavelength mask is the range of wavelengths used to determined light intensity values from the acquired spectrum. Fig. 9 shows a spectral output of a recombined light from the optical path, the area below the cut-off wavelength 258 is between 525 and 537.5 nanometers and the area above the cut-off wavelength 260 is between 562.5 and 575 nanometers.

The third step is to calculate current sample ratio ($SR_{current}$) 266. This is done by dividing LI (area above cut-off wavelength 260) for different known concentrations of material in a liquid from measurement chamber by the base LI (area below the cut-off wavelength 258) from the primary optical path (see Fig. 10).

$$SR_{current} = \frac{Sample\ Light\ Intensity}{Base\ Light\ Intensity}$$

In the next step, $SR_{OPPM}$ is determined by dividing the sample LI (area above cut-off wavelength 260) for the blank sample from the measurement chamber 200 by the base LI (area below the cut-off wavelength 258) from the primary optical path.

$$SR_{OPPM} = \frac{Sample\ Light\ Intensity}{Base\ Light\ Intensity}$$

This step is known as store current sample ratio as zero PPM ratio 268.

The light control module 226 determines the $SR_{OPPM}$, and is stored after which further blank sample readings can be taken and compared against the blank sample $SR_{OPPM}$. If $SR_{OPPM}$ is determined, the value stored in these steps can be skipped throughout the remainder of the standard operation. Otherwise, a determination is made of "Is zero PPM sample ratio ($SR_{OPPM}$) set" 270? If "no," the cycle is repeated until a current sample ratio at zero PPM ratio 268 is determined.

If the $SR_{OPPM}$ is set, then calculate absorption 272 will occur by dividing $SR_{OPPM}$ by $SR_{current}$, which is generated for different known concentrations of material in a liquid.

$$Absorbance = Log_{10}\left(\frac{SR_{OPPM}}{SR_{current}}\right)$$

If the output for the light source 216 drops by ten percent, both the base and sample light intensities can be expected to drop by ten percent. As absorption is based on the zero and current sample ratios, the respective ratios will remain constant, negating the effect of varying light output due to the LED fatigue of the light source 216, changes in environment, or changes in operating temperature.

The final step is to convert the absorption value (ABS) into a PPM value using a quadratic equation of order 3 by setting y-intercept to zero in the calculate PPM reading 274 step.

$$Reading = a^*ABS^3 + b^*ABS^2 + c^*ABS$$

The reading value should be zero if the absorption is zero; however, a constant value is not always used.

Illustrative examples of how the steps in the flow chart (Fig. 10) illustrating the operational logic of the light control module are used to determine readings, and illustrate how the system behaves under different conditions. Any reference to spectrum charts, light intensity counts, wavelengths or any other figures are for demonstrational purposes.

### Example 1 - Blank Sample

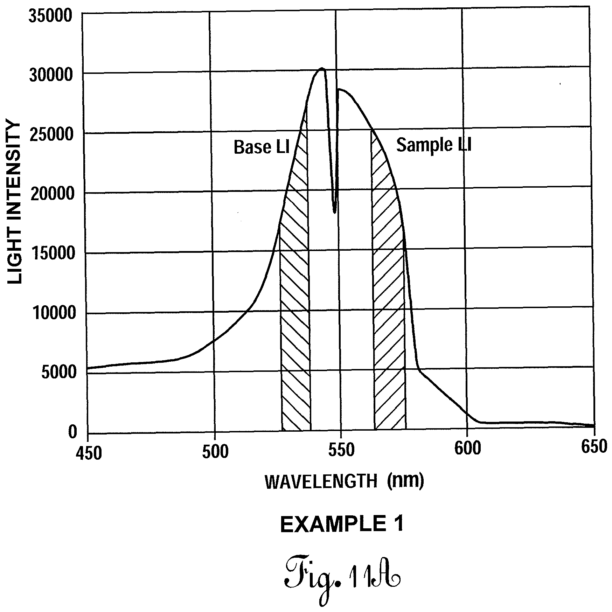

The first example (Blank Sample), assumes that the system is measuring a blank sample, and the $SR_{OPPM}$ value has been set at 1.0633. See figure 11A.

    1. Spectrum is acquired
    2. Base and sample masks are calculated:

- Base LI: 21,000
- Sample LI: 19,750

    3. Current Sample ratio is calculated:

- 19750/21000 = 0.9405

    4. Absorbance is calculated:

- $Log_{10}(0.9405/0.9405) = 0.00$ absorbance

### Example 2 - Oil in Chamber

The second example (Oil in Chamber) assumes that oil is placed into the measuring chamber, and that it absorbs a portion of the light intensity on the sample path.

The chart below shows that the overall spectral intensity for the sample leg is reduced.

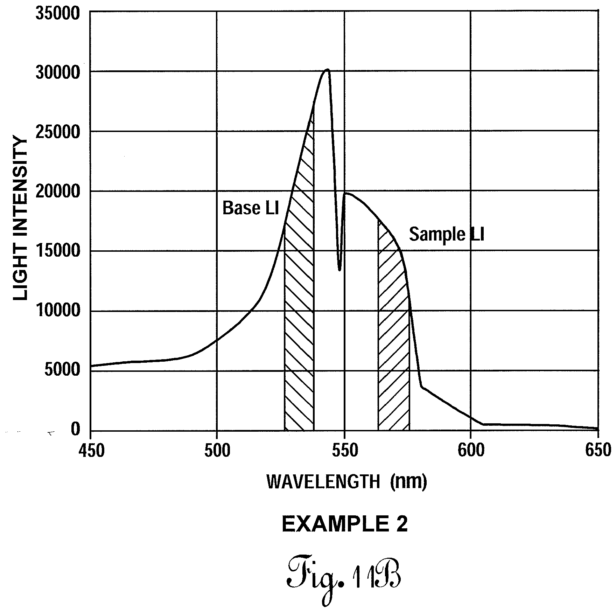

Calculating the absorbance assuming that the $SR_{OPPM}$ is still 1.0633 as mentioned in Example 1. See figure 11B.

1. Spectrum is acquired

2. Base and sample masks are calculated:

- Base LI: 21,000
- Sample LI: 14,000

3. Current Sample ratio is calculated:

- 14000/21000 = 0.6667

4. Absorbance is calculated:

- $Log_{10}(0.9405/0.6667) = 0.1494$ absorbance

**Example 3 - Degraded Light**

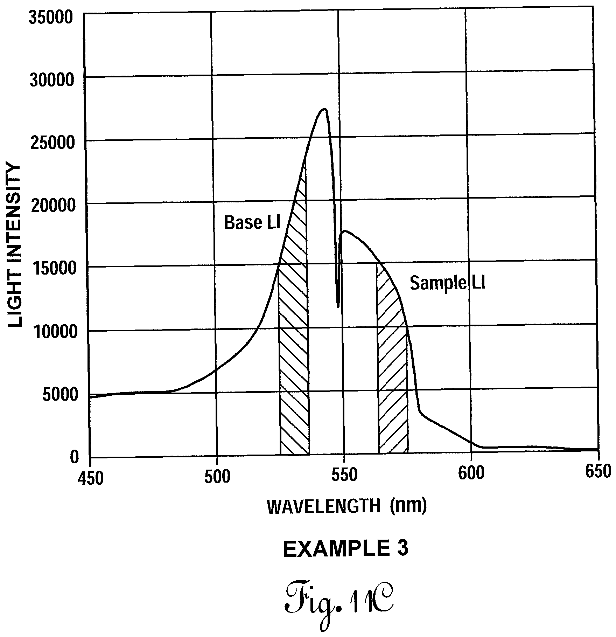

Example 3 assumes that the same oil sample is present as for Example 2. However, the light output has decreased by ten percent. See figure 11C.

1. Spectrum is acquired

2. Base and sample masks are calculated:

- Base LI: 18,900
- Sample LI: 12,600

3. Current Sample ratio is calculated:

- 12600/18900 = 0.6667

4. Absorbance is calculated:

- $Log_{10}(0.9405/0.6667) = 0.1494$ absorbance - identical to the reading in example 2

**Example 4 - Blank Sample**

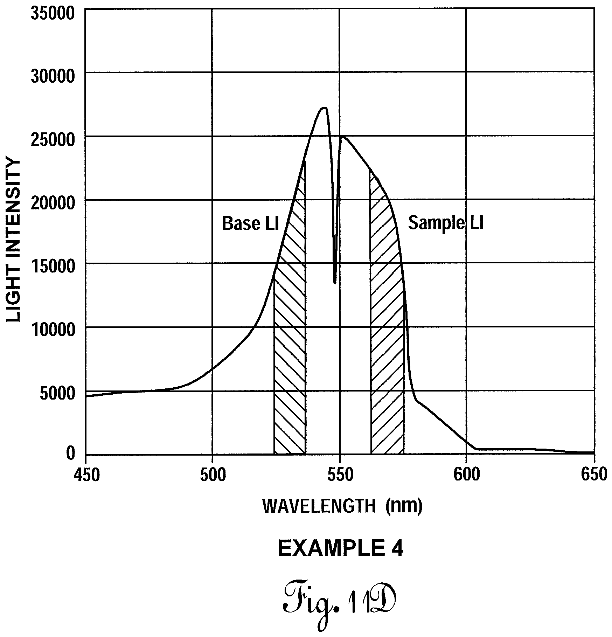

Example 4 assumes that the measuring chamber contains a blank sample, similar to Example 1, with the light source remaining degraded. See figure 11D.

1. Spectrum is acquired

2. Base and sample masks are calculated:

- Base LI: 18,900
- Sample LI: 17,775

3. Current Sample ratio is calculated:

- 17775/18900 = 0.9405

4. Absorbance is calculated:

- $Log_{10}(0.9405/0.9405) = 0.000$ absorbance - identical to the reading in example 1

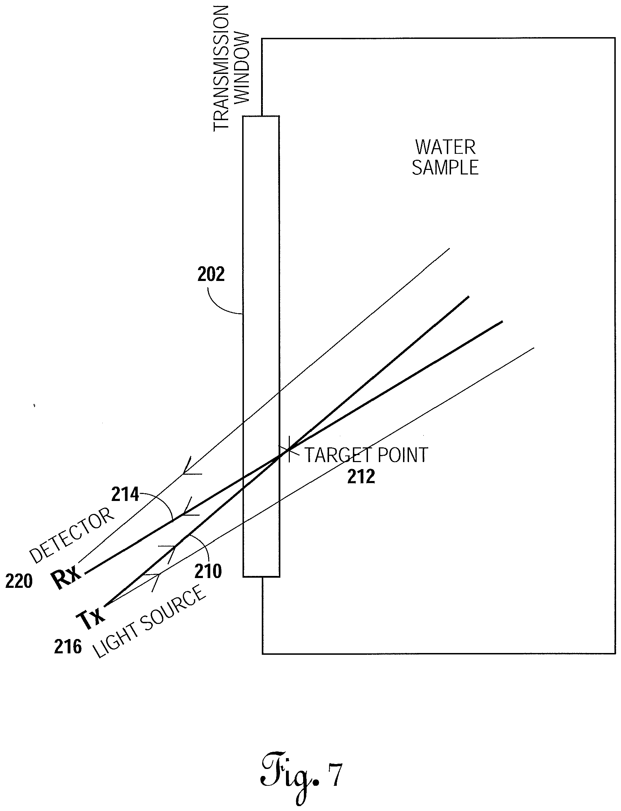

Fig. 7 is a schematic view of measurements made at the target point 212, which is just inside of the measurement window 202. The transmitted signal 210 travels to the target point 212 and the absorbed light 214 is what is furnished to the detector 220. Light source 216 is what provides the transmitted signal 210.

**Claims**

1. An apparatus for measuring of material in a liquid through the absorption of light, the apparatus having a measurement chamber (110) with a measurement window (112) through which (a) a transmitted signal projects to a target point (150), and (b) an absorbed light signal is reflected from the target point (150), a coupling mass with piezoelectric transducers being connected to said measurement window to cause vibrations thereof to keep said measurement window clean, a source of power (128) for said apparatus, a blank sample for calibrating said apparatus, the improvement comprising:

   a light source (216) for generating said transmitted signal;
   a first beam splitter (242), wherein the first beam splitter (242) is reflective below a cut-off wavelength and transmissive above the cut-off wavelength, wherein the first beam splitter (242) receives light from the light source (216), wherein the light is split by the first beam splitter (242) so that a first portion of the light with first wavelengths above the cut-off wavelength is projected to said target point (150) as the transmitted signal, and wherein a second portion of the light with second wavelengths below the cut-off wavelength is reflected to a second beam splitter (244) as a reflected light signal;
   the second beam splitter (244) receiving said absorbed light signal from said target point (150) and said reflected light signal from said first beam splitter (242) to give an output of recombined light beams, said second beam splitter (244) being highly reflective above the cut-off wavelength and highly transmissive below the cut-off wavelength;
   a detector (262) for receiving said recombined light beams and generating a single spectral output;
   a light control module (226) connected to said light source (216) and said detector (262), said light control module (226) compensating for deviations in intensity of said transmitted signal by:
   calibrating with said blank sample, by:

   calculating $SR_{current}$ by dividing a measured light intensity above the cut-off wavelength (sample LI) by a measured light intensity below the cut-off wavelength (base LI) for a current sample, and
   calculating $SR_{OPPM}$ by dividing sample LI by base LI for the blank sample, and thereafter calculating absorption by the following:

$$Absorbance = Log_{10}\left(\frac{SR_{OPPM}}{SR_{current}}\right).$$

2. The apparatus for measuring of material in a liquid through absorption of light as recited in Claim 1, further including at least one collimator (246, 248, 250, 252) for said first beam splitter (242) and said second beam splitter (244).

3. The apparatus for measuring of material in a liquid through absorption of light as recited in Claim 1 wherein said calculating includes storing zero parts per million (PPM) for said blank sample.

4. The apparatus for measuring of material in a liquid through absorption of light as recited in Claim 3 wherein said calculating absorption includes converting absorbance (ABS) into parts per million (PPM) by a quadratic equation and setting y-intercept to zero as follows:

$$Reading = a * ABS^3 + b * ABS^2 + c * ABS.$$

5. A method of determining material in a liquid through absorption of light comprising the steps of:

   flowing said liquid through a measurement chamber (110) having a measurement window (112) therein;
   generating a light beam;
   directing said light beam through a first beam splitter (242), wherein the first beam splitter (242) is reflective below a cut-off wavelength and transmissive above the cut-off wavelength, wherein the first beam splitter (242) splits the light beam so that a first portion of the light beam with wavelengths above the cut-off wavelength form a transmitted signal, and wherein a second portion of the light beam with wavelengths below the cut-off wavelength form a first reflected signal;

directing said transmitted signal through a single channel (208) and said measurement window (112) to a target point (150) adjacent thereto;

receiving an absorbed light signal from said target point (150) through said single channel (208) by a second beam splitter (204), said second beam splitter (244) being highly reflective above said cut-off wavelength and highly transmissive below said cut-off wavelength, said second beam splitter (244) giving a recombined light beam output made up of

(1) said first reflected signal and

(2) said absorbed light signal below said cut-off wavelength;

detecting said recombined light beam output by a detector (262) to generate a single spectral output;

calibrating by putting a blank sample in said measurement chamber (110) and calculating and storing $SR_{0PPM}$ ( zero parts per million), by dividing a measured light intensity above the cut-off wavelength by a measured light intensity below the cut-off wavelength for the blank sample;

calculating the current sample ratio $SR_{current}$ by dividing light intensity above said cut-off wavelength by light intensity below said cut-off wavelength for the current sample; and

calculating absorption by

$$Absorbance = Log_{10}\left(\frac{SR_{OPPM}}{SR_{current}}\right).$$

**6.** The method of determining material in a liquid through absorption of light as recited in Claim 5 includes a final step of converting absorbance (ABS) into parts per million (PPM) by a quadratic equation and setting Y intercept to zero as follows:

$$Reading = a^* ABS^3 + b^* ABS^2 + c^* ABS.$$

**Patentansprüche**

**1.** Vorrichtung zum Messen von Material in einer Flüssigkeit durch die Absorption von Licht, wobei die Vorrichtung eine Messkammer (110) mit einem Messfenster (112) aufweist, durch das (a) ein übertragenes Signal zu einem Zielpunkt (150) projiziert, und (b) ein absorbiertes Lichtsignal von dem Zielpunkt (150) reflektiert wird, eine Kopplungsmasse mit piezoelektrischen Wandlern, die mit dem Messfenster verbunden ist, um zu bewirken, dass Schwingungen derselben das Messfenster sauber halten, eine Energiequelle (128) für die Vorrichtung, eine Blindprobe zum Kalibrieren der Vorrichtung, wobei die Verbesserung umfasst:

eine Lichtquelle (216) zum Erzeugen des übertragenen Signals;

einen ersten Strahlteiler (242), wobei der erste Strahlteiler (242) unterhalb einer Grenzwellenlänge reflektierend ist und oberhalb der Grenzwellenlänge transmissiv ist, wobei der erste Strahlteiler (242) Licht von der Lichtquelle (216) empfängt, wobei das Licht durch den ersten Strahlteiler (242) getrennt wird, so dass ein erster Teil von dem Licht mit ersten Wellenlängen oberhalb der Grenzwellenlänge zu dem Zielpunkt (150) als das übertragene Signal projiziert wird, und wobei ein zweiter Teil von dem Licht mit zweiten Wellenlängen unterhalb der Grenzwellenlänge zu einem zweiten Strahlteiler (244) als ein reflektiertes Lichtsignal reflektiert wird;

wobei der zweite Strahlteiler (244) das absorbierte Lichtsignal von dem Zielpunkt (150) und das reflektierte Lichtsignal von dem ersten Strahlteiler (242) empfängt, um eine Ausgabe von rekombinierten Lichtstrahlen auszugeben, wobei der zweite Strahlteiler (244) oberhalb der Grenzwellenlänge hochreflektierend und unter der Grenzwellenlänge hoch-transmissiv ist;

einen Detektor (262) zum Empfangen der rekombinierten Lichtstrahlen und zum Erzeugen eines einzigen spektralen Ausgangssignals;

ein Lichtsteuermodul (226), das mit der Lichtquelle (216) und dem Detektor (262) verbunden ist, wobei das Lichtsteuermodul (226) Abweichungen der Intensität des übertragenen Signals kompensiert durch:

Kalibrieren mit der Blindprobe durch:

Berechnen von $SR_{current}$ durch Dividieren einer gemessenen Lichtintensität oberhalb der Grenzwellenlänge (Probe LI) durch eine gemessene Lichtintensität unterhalb der Grenzwellenlänge (Basis LI) für eine aktuelle Probe, und Berechnen von $SR_{0PPM}$ durch Dividieren der Probe LI durch die Basis LI für die Blindprobe, und danach

Berechnen der Absorption durch das Folgende:

$$Absorption = Log_{10}\left(\frac{SR_{OPPM}}{SR_{current}}\right).$$

**2.** Vorrichtung zum Messen von Material in einer Flüssigkeit durch Absorption von Licht nach Anspruch 1, die ferner mindestens ein Streustrahlenraster (246, 248, 250, 252) für den ersten Strahlteiler (242) und den zweiten Strahlteiler (244) beinhaltet.

**3.** Vorrichtung zum Messen von Material in einer Flüssigkeit durch Absorption von Licht nach Anspruch 1, wobei das Berechnen das Speichern von Null Teilen pro Million (PPM) für die Blindprobe beinhaltet.

**4.** Vorrichtung zum Messen von Material in einer Flüssigkeit durch Absorption von Licht nach Anspruch 3, wobei das Berechnen der Absorption das Umwandeln der Absorption (ABS) in Teile pro Million (PPM) durch eine quadratische Gleichung und das Setzen vom y-Schnittpunkt auf Null wie folgt beinhaltet:

$$Messwert = a^* ABS^3 + b^* ABS^2 + c^* ABS.$$

**5.** Verfahren zum Bestimmen von Material in einer Flüssigkeit durch Absorption von Licht, das die folgenden Schritte umfasst:

Strömen der Flüssigkeit durch eine Messkammer (110) mit einem Messfenster (112) darin;

Erzeugen eines Lichtstrahls;

Leiten des Lichtstrahls durch einen ersten Strahlteiler (242), wobei der erste Strahlteiler (242) unterhalb einer Grenzwellenlänge reflektierend ist und oberhalb der Grenzwellenlänge transmissiv ist, wobei der erste Strahlteiler (242) den Lichtstrahl trennt, so dass ein erster Teil von dem Lichtstrahl mit Wellenlängen oberhalb der Grenzwellenlänge ein übertragenes Signal bilden, und wobei ein zweiter Teil von dem Lichtstrahl mit Wellenlängen unterhalb der Grenzwellenlänge ein erstes reflektiertes Signal bildet;

Leiten des übertragenen Signals durch einen Einzelkanal (208) und das Messfenster (112) zu einem dazu benachbarten Zielpunkt (150);

Empfangen eines absorbierten Lichtsignals von dem Zielpunkt (150) durch den Einzelkanal (208) durch einen zweiten Strahlteiler (204), wobei der zweite Strahlteiler (244) oberhalb der Grenzwellenlänge hochreflektierend und unterhalb der Grenzwellenlänge hoch-transmissiv ist, wobei der zweite Strahlteiler (244) eine rekombinierte Lichtstrahlausgabe ergibt, die aus Folgendem besteht:

(1) dem ersten reflektierten Signal und

(2) dem absorbierten Lichtsignal unterhalb der Grenzwellenlänge;

Erfassen der rekombinierten Lichtstrahlausgabe mittels einem Detektor (262), um ein einziges spektrales Ausgangssignal zu erzeugen;

Kalibrieren durch Eingeben einer Blindprobe in die Messkammer (110) und Berechnen und Speichern von $SR_{0PPM}$ (Null Teile pro Million) durch Dividieren einer gemessenen Lichtintensität oberhalb der Grenzwellenlänge durch eine gemessene Lichtintensität unterhalb der Grenzwellenlänge für die Blindprobe;

Berechnen des aktuellen Probenverhältnisses $SR_{current}$ durch Dividieren der Lichtintensität oberhalb der Grenzwellenlänge durch Lichtintensität unterhalb der Grenzwellenlänge für die aktuelle Probe; und

Berechnen der Absorption durch

$$Absorption = Log_{10}\left(\frac{SR_{OPPM}}{SR_{current}}\right).$$

**6.** Verfahren zum Bestimmen von Material in einer Flüssigkeit durch Absorption von Licht nach Anspruch 5, das einen abschließenden Schritt des Umwandelns der Absorption (ABS) in Teile pro Million (PPM) durch eine quadratische Gleichung und Einstellen des Y-Schnittpunktes auf Null wie folgt beinhaltet:

$$Messwert = a^* ABS^3 + b^* ABS^2 + c^* ABS.$$

## Revendications

1. Appareil de mesure d'un matériau dans un liquide par l'absorption de lumière, l'appareil ayant une chambre de mesure (110) avec une fenêtre de mesure (112) à travers laquelle (a) un signal transmis se projette sur un point cible (150) et (b) un signal lumineux absorbé est réfléchi du point cible (150), une masse de couplage avec des transducteurs piézoélectriques étant connectée à ladite fenêtre de mesure pour amener des vibrations de celle-ci afin de garder ladite fenêtre de mesure propre, une source d'alimentation (128) pour ledit appareil, un échantillon témoin pour étalonner ledit appareil, l'amélioration comprenant :

   une source lumineuse (216) pour générer ledit signal transmis ;
   un premier diviseur de faisceau (242), dans lequel le premier diviseur de faisceau (242) est réfléchissant en dessous d'une longueur d'onde de coupure et transmissif au-dessus de la longueur d'onde de coupure, dans lequel le premier diviseur de faisceau (242) reçoit de la lumière provenant de la source lumineuse (216), dans lequel la lumière est divisée par le premier diviseur de faisceau (242) de sorte qu'une première partie de la lumière avec des premières longueurs d'onde au-dessus de la longueur d'onde de coupure soit projetée vers ledit point cible (150) en tant que signal transmis et
   dans lequel une deuxième partie de la lumière avec des deuxièmes longueurs d'onde en dessous de la longueur d'onde de coupure est réfléchie vers un deuxième diviseur de faisceau (244) en tant que signal lumineux réfléchi ;
   le deuxième diviseur de faisceau (244) recevant ledit signal lumineux absorbé depuis ledit point cible (150) et ledit signal lumineux réfléchi provenant dudit premier diviseur de faisceau (242) pour donner une sortie de faisceaux lumineux recombinés, ledit deuxième diviseur de faisceau (244) étant fortement réfléchissant au-dessus de la longueur d'onde de coupure et fortement transmissif en dessous de la longueur d'onde de coupure ;
   un détecteur (262) pour recevoir lesdits faisceaux lumineux recombinés et générer une sortie spectrale unique ;
   un module de commande de lumière (226) connecté à ladite source lumineuse (216) et audit détecteur (262), ledit module de commande de lumière (226) compensant des déviations d'intensité dudit signal transmis par :
   l'étalonnage avec ledit échantillon témoin, par :

   le calcul de $SR_{current}$ en divisant une intensité lumineuse mesurée au-dessus de la longueur d'onde de coupure (LI échantillon) par une intensité lumineuse mesurée en dessous de la longueur d'onde de coupure (LI base) pour un échantillon actuel et
   le calcul de $SR_{0PPM}$ en divisant LI échantillon par LI base pour l'échantillon témoin et par la suite
   le calcul de l'absorption par ce qui suit :

$$Absorption = Log_{10}\left(\frac{SR_{0PPM}}{SR_{current}}\right).$$

2. Appareil de mesure de matériau dans un liquide par absorption de lumière selon la revendication 1, incluant en outre au moins un collimateur (246, 248, 250, 252) pour ledit premier diviseur de faisceau (242) et ledit deuxième diviseur de faisceau (244).

3. Appareil de mesure de matériau dans un liquide par absorption de lumière selon la revendication 1, dans lequel ledit calcul inclut le stockage de zéro partie par million (PPM) pour ledit échantillon témoin.

4. Appareil de mesure de matériau dans un liquide par absorption de lumière selon la revendication 3, dans lequel ledit calcul d'absorption inclut une conversion d'absorbance (ABS) en parties par million (PPM) par une équation quadratique et le réglage de l'intersection de y à zéro comme suit :

$$Mesure = a^* ABS^3 + b^* ABS^2 + c^* ABS.$$

5. Procédé de détermination de matériau dans un liquide par absorption de lumière comprenant les étapes consistant à :

faire s'écouler ledit liquide à travers une chambre de mesure (110) ayant une fenêtre de mesure (112) en son sein ;

générer un faisceau lumineux ;

diriger ledit faisceau lumineux à travers un premier diviseur de faisceau (242), dans lequel le premier diviseur de faisceau (242) est réfléchissant en dessous d'une longueur d'onde de coupure et transmissif au-dessus de la longueur d'onde de coupure, dans lequel le premier diviseur de faisceau (242) divise le faisceau lumineux de sorte qu'une première partie du faisceau lumineux avec des longueurs d'onde au-dessus de la longueur d'onde de coupure forme un signal transmis et dans lequel une deuxième partie du faisceau lumineux avec des longueurs d'onde en dessous de la longueur d'onde de coupure forme un premier signal réfléchi ;

diriger ledit signal transmis à travers un canal unique (208) et ladite fenêtre de mesure (112) vers un point cible (150) adjacent à celui-ci ;

recevoir un signal lumineux absorbé provenant dudit point cible (150) à travers ledit canal unique (208) par un deuxième diviseur de faisceau (204), ledit deuxième diviseur de faisceau (244) étant fortement réfléchissant au-dessus de ladite longueur d'onde de coupure et fortement transmissif en dessous de ladite longueur d'onde de coupure, ledit deuxième diviseur de faisceau (244) donnant une sortie de faisceaux lumineux recombinés constituée par

(1) ledit premier signal réfléchi et
(2) ledit signal lumineux absorbé en dessous de ladite longueur d'onde de coupure ;

détecter ladite sortie de faisceaux lumineux recombinés par un détecteur (262) pour générer une sortie spectrale unique ;

étalonner en plaçant un échantillon témoin dans ladite chambre de mesure (110) et calculer et stocker $SR_{0PPM}$ (zéro partie par million) en divisant une intensité lumineuse mesurée au-dessus de la longueur d'onde de coupure par une intensité lumineuse mesurée en dessous de la longueur d'onde de coupure pour l'échantillon témoin ;

calculer le rapport d'échantillon actuel $SR_{current}$ en divisant l'intensité lumineuse au-dessus de ladite longueur d'onde de coupure par l'intensité lumineuse en dessous de ladite longueur d'onde de coupure pour l'échantillon actuel ; et

calculer l'absorption par

$$Absorption = Log_{10}\left(\frac{SR_{0PPM}}{SR_{current}}\right).$$

6. Procédé de détermination de matériau dans un liquide par absorption de lumière selon la revendication 5, qui inclut une étape finale de conversion d'absorbance (ABS) en parties par million (PPM) par une équation quadratique et de réglage de l'intersection de Y à zéro comme suit :

$$Mesure = a* ABS^3 + b* ABS^2 + c* ABS.$$

**110**

WATER FLOW → → WATER FLOW

**120**
**122**
**118**
**112**
**114**
**116**

**123**
**125**
**128**

LASERS/LEDS/LAMPS **126**

FLUORESCENCE DETECTOR **124**

ULTRASONIC PSU

RS232

**138**

PC & DISPLAY MODULE

**134** SIGNAL PROCESSING/ CONDITIONING

**132** ULTRASONIC PSU CONTROL

4-20mA

RS232

ETHERNET

4-20mA

**136** DAC & PC INTERFACE BOARD

**140** MAINS SUPPLY CONDITIONING

**142** VALVE CONTROL INTERFACE

VALVE 1 **144**

VALVE 2 **146**

**130**

*Fig. 1*

MEASUREMENT
WINDOW

**148**
WATER SAMPLE

**152**

**112**

**150**
TARGET POINT

RECEIVED
FLUORESCENCE
LIGHT

**120**

**122** TRANSMITTED
LIGHT SOURCE/
EXITATION SIGNAL

*Fig.* 2

RECEIVED
FLUORESCENT
LIGHT
**120**

**118**

**122**
TRANSMITTED
LIGHT SOURCE
EXCITATION
SIGNAL

**156**

**154**

180°

**158**

**112**
TRANSMISSION
WINDOW

**150**
TARGET POINT

**152**

*Fig. 3*

*Fig. 4A*

EP 3 315 944 B1

Fig. 4B

**162**

**164**

**118**

**128**

ULTRASONIC
PSU

**120** **122**

**126** LASERS

FLUORESCENCE
DETECTOR **124**

**118**

**112**

**118**

**154** **156**

**122** **120**

**150**
TARGET POINT

**138**

PC &
DISPLAY
MODULE

**132**

ULTRASONIC
PSU CONTROL

**160**

LASER
DRIVE

**134**

SIGNAL
PROCESSING/
CONDITIONING

**136**

DAC & PC INTERFACE BOARD

→ RS232

→ ETHERNET

4-20mA → 4-20mA

**140**

MAINS SUPPLY
CONDITIONING

VALVE CONTROL
INTERFACE **142**

**130**

*Fig. 5*

Fig. 6

WATER FLOW

WATER FLOW

200

212

202

208 204

206

210

214

218

216

PMT/ SPECTROMETER

220

ULTROSONIC PSU

230

232

PC & DISPLAY MODULE

RS232

222

224

230

SIGNAL PROCESSING / CONDITIONING & LIGHT CONTROL MODULE

226

ULTRASONIC PSU CONTROL

RS232

ETHERNET

228

DAC & PC INTERFACE BOARD

4-20mA

4-20mA

MAINS SUPPLY CONDITIONING

234

VALVE CONTROL INTERFACE

236

INLET VALVE

238

OUTLET VALVE

240

EP 3 315 944 B1

**Fig. 7**

*Fig. 8*

Fig. 9

**NOTE:**

THE SYSTEM MUST HAVE A SRoppm VALUE SET BEFORE ANY READING VALUES CAN BE DETERMINED, AND WILL REMAIN CONSTANT THROUGHOUT STANDARD OPERATION OF THE SYSTEM.

THE SRoppm VALUE IS SET MANUALLY DURING THE CALIBRATION PROCESS AND IS DENOTED BY THE DASHED ARROWS. THIS WILL BE CARRIED OUT DURING SYSTEM INITIALISATION, OR IF THE BLANK SAMPLE CONTAINS ADDITIVES ( e.g. SOAP OR EMULSIFIERS.)

OBTAIN READING FROM DETECTOR — 262

CALCULATE BASE LI & SAMPLE LI — 264

CALCULATE CURRENT SAMPLE RATIO ($SRcurrent$) — 266

IS ZERO PPM SAMPLE RATIO ($SRoppm$) SET ? — 270

STORE CURENT SAMPLE RATIO AS ZERO PPM RATIO — 268

NO

$SRoppm$

YES

CALCULATE ABSORBANCE — 272

CALCULATE PPM READING — 214

*Fig. 10*

23

EXAMPLE 1

*Fig. 11A*

**EXAMPLE 2**

*Fig. 11B*

EXAMPLE 3

*Fig. 11C*

EXAMPLE 4

*Fig. 11D*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7935938 B
- US 5446280 A
- US 2013100452 A
- US 14812026 B